# EUROPÄISCHE PATENTSCHRIFT

(11) **EP 2 349 930 B1**
(45) Veröffentlichungstag und Bekanntmachung des Hinweises auf die Patenterteilung: **29.05.2013**
(21) Anmeldenummer: 09740084.0
(22) Anmeldetag: 07.10.2009
(51) Int. Cl.: C01F 17/00, C01F 11/46, C09C 1/02, C08K 9/02, D01F 1/04, D21H 15/12, D21H 19/38

(54) **Verfahren zur Herstellung gemischtmetallischer Seltenerdmetallhalogenidlösungen in organischen Lösungsmitteln**
Process for producing mixed metal rare earth metal halide solutions in organic solvents
Procédé de préparation de solutions d'halogénures de métaux de terres rares métalliques mixtes dans des solvants organiques

(30) Priorität: 08.10.2008 DE 102008050440
(43) Veröffentlichungstag der Anmeldung: 03.08.2011
(73) Patentinhaber: Chemetall GmbH, 60487 Frankfurt am Main (DE)
(72) Erfinder: WIETELMANN, Ulrich, 61381 Friedrichsdorf (DE)
(74) Vertreter: Rottmayer, Hans
(86) Internationale Anmeldenummer: PCT/EP2009/062993
(87) Internationale Veröffentlichungsnummer: WO 2010/040761

(56) Entgegenhaltungen:
- WO-A1-2006/063755
- KRASOVSKIJ A, KOPP F, KNOCHEL P: "Lösliche Lanthanoid-Salze (LnCl3*2LiCl) für die verbesserte Addition magnesiumorganischer Reagentien and Carbonylverbindungen" ANGEWANDTE CHEMIE, Bd. 118, 2006, Seiten 511-515, XP002592039 DOI: 10.1002/ange.200502485 in der Anmeldung erwähnt

## Beschreibung

Seltenerdhalogenide (SEHal₃ mit SE = Scandium, Yttrium, Lanthan und Lanthanoiden (Ce, Pr, Nd, Pm, Sm, Eu, Gd, Tb, Dy, Ho, Er, Tm, Yb, Lu) und Hal = Cl, Br oder I) werden in wasserfreier Form als Reagenzien in der organischen Synthese eingesetzt oder sie dienen als Ausgangsverbindungen zur Herstellung weiterer SE-Verbindungen, wie SE-Alkoxiden oder SE-Organylen. So werden beispielsweise ausgehend vom THF-Komplex des Neodymchlorids Allylneodymverbindungen hergestellt, welche als Katalysatoren für die stereospezifische Butadienpolymerisation Verwendung finden (EP 0 919 573 B1; R. Taube et al, J. Organometal. Chem. 1 (513), 37-47, 1996).

Seltenerdhalogenide können besonders elegant in einem aprotischen Lösemittel durch Umsetzung von Seltenerdoxiden mit Halogenierungsmitteln der allgemeinen Formel

MHalX¹X²X³

mit M = Si, Ge, Sn, Ti, Zr, Hf
Hal = Cl, Br, I
X¹, X², X³ = unabhängig voneinander Cl, Br, I, H, Alkyl oder Aryl, wobei die Alkyl-oder Arylreste einen oder mehrere weitere Halogensubstituenten, ausgewählt aus der Gruppe F, Cl, Br oder I tragen können, hergestellt werden (WO 2006/063755 A1).

Bei diesem Verfahren entsteht das Seltenerdhalogenid als Feststoff, bei Verwendung solvatbildender Lösungsmittel wie z.B. THF als fester Solvatkomplex, während der Metallanteil des Halogenierungsmittels MHalX¹X²X³ in der Regel in flüssiger oder 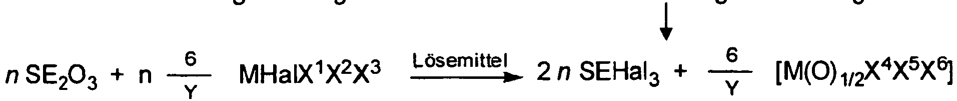 gelöster Form anfällt. Dies wird durch nachfolgendes Reaktionsschema erläutert:
Dabei bedeutet y die Anzahl von Halogenidatomen im Halogenierungsmittel MHalX¹X²X³, n gibt den Polymerisationsgrad des Reaktionsproduktes [M(O)_{1/2}X⁴X⁵X⁶] wieder, X₄, X₅ und X₆ haben die Bedeutung (O)_{1/2} für den Fall dass X¹ und/oder X² und/oder X³ in MHalX¹X²X³ die Bedeutung Halogenid haben oder sie besitzen dieselbe Bedeutung wie X¹ und/oder X² und/oder X³ für den Fall, dass diese in MHalX¹X²X³ ≠ Halogenid sind.

Die Seltenerdhalogenide besitzen nur eine geringe Löslichkeit in den verwendeten Lösemitteln oder Lösemittelmischungen, wodurch das Seltenerdhalogenid in fester Form, zumeist als Solvat mit dem verwendeten aprotischen polaren Lösemittel, durch fest/flüssig-Trennung in reiner Form isoliert werden kann.

Beispielsweise bildet sich bei der Umsetzung von La₂O₃ mit SiCl₄ in THF ein LaCl₃ 2 THF-Komplex, der in THF nur geringfügig (ca. < 1 %, bezogen auf LaCl₃) löslich ist und in kristalliner Form durch Filtration vom Lösemittel und dem als Nebenprodukt entstehenden SiO₂-Sol abgetrennt und - je nach genauen Reaktions- und Aufarbeitungsbedingungen - mit Ausbeuten zwischen ca. 60 und 90 % isoliert werden kann.

Seltenerdmetallsalze werden häufig verwendet, um Carbonylverbindungen oder Imin-Derivate für die 1,2-Addition metallorganischer Reagenzien zu aktivieren (S. Kobayashi, M. Sugiura, H.W.L. Lam, Chem. Rev. 2002, 35, 209). Dafür können die Seltenerdmetallsalze, z.B. Cerchlorid, in fester Form eingesetzt werden (T. Imamoto, Y. Sugiyura, N. Takiyama, Tetrahedron Lett. 1984, 25, 4233). Dieses Verfahren ist aber mit Nachteilen behaftet, die auf ungünstige Eigenschaften der festen Seltenerdmetallsalze zurückgeführt werden können. Zum einen sind die Feststoffe extrem hygroskopisch, weshalb sie unter strengen Inertgasbedingungen gehandhabt werden müssen, was im Falle von Feststoffen insbesondere im technischen Maßstab nicht einfach ist bzw aufwändige technische Vorkehrungen (Feststoffschleuse und Feststoffdosiersystem) erfordert. Das Einschleppen von Wasser muß auf alle Fälle vermieden werden, da die Verwendung findenden metallorganischen Reagenzien (meist Grignardverbindungen oder Organolithiumverbindungen) extrem wassersensitiv sind. Weiterhin sind die Seltenerdhalogenide in den allerwenigsten Lösemitteln löslich. Deshalb sind die Umsetzungen nach Imamoto heterogen, was schlechte Durchmischung und häufig unbefriedigende chemische Ausbeuten bei der 1,2-Addition zur Folge hat.

Eine wesentliche Verbesserung des Verfahrens nach Imamoto wurde von P. Knochel et. al. gefunden. Durch Zusatz von Lithiumsalzen, insbesondere Lithiumchlorid, lässt sich nämlich die Löslichkeit von Seltenerdmetallsalzen deutlich steigern (A. Krasovskiy, F. Kopp, P. Knochel, Angew. Chem. 2006, 118, 511-5). In Folge dessen lassen sich die gewünschten organometallischen Reaktionen in homogener Phase durchführen und die Ausbeuten sind in der Regel verbessert. Weiter ist die Handhabung von Seltenerdhalogenid/Lithiumsalzlösungen (z.B. LaCl₃ x 2 LiCl in THF) wesentlich vereinfacht. Von Nachteil ist jedoch die umständliche Herstellung der Seltenerdhalogenid/Lithiumsalzlösungen, welche Gegenstand von EP 1759765 (LMU 2005) ist. Das Verfahren zur Herstellung von Seltenerdchlorid/Lithiumsalzlösungen, beispielsweise einer Lösung von LaCl₃ 2LiCl in THF sieht vor, kommerziell erhältliches Seltenerdchloridhydrat (z.B. LaCl₃ 6H₂O) mit 2 Molequivalenten LiCl abzumischen, in Wasser zu lösen und die entstandene Lösung oder Suspension zunächst bei RT 4 h unter Hochvakuumbedingungen zu rühren. Dann soll die Temperatur in Schritten auf 40, 60, 80, 100, 120, 140 und zuletzt 160 °C angehoben werden, wobei bei jedem der genannten Temperaturniveaus 4 h verweilt werden soll. Dieses langsame Aufheizen ist essentiell, um eine Hydrolyse des Seltenerdchlorids, bei der unlösliche (für organische Folgereaktionen unwirksame) Hydrolyseprodukte entstünden, zu verhindern. Die Trocknung nach angegebenem Verfahren dauert also 8 x 4 = 32 Stunden. Ein derartig langwieriger Prozeß ist naturgemäß mit einem hohen Kostenaufwand verbunden.

Weiterhin ist nachteilig, dass der Wassergehalt des resultierenden Salzes noch zu hoch ist, um es direkt als Additiv für metallorganische Reaktionen verwenden zu können. Deshalb wird das wie beschrieben hergestellte Produkt nach Auflösen in organischen Lösemitteln wie z. B. THF nochmals mit Molsieb nachgetrocknet. Die einzusetzenden Kosten für das Molsieb verteuern den Prozeß. Zusätzlich ist ein Filtrationsschritt erforderlich und am Molsieb wird eine nicht unerhebliche Produktmenge adsorbiert, was Ausbeuteverluste zur Folge hat.

Aufgabe der vorliegenden Erfindung war es daher, ein möglichst einfaches und kostengünstiges Verfahren bereitzustellen, mit dessen Hilfe Lösungen von Seltenerdmetallsalzen im Gemisch mit Lithiumsalzen in gegenüber Oranometallen inerten Lösemitteln hergestellt werden können. Dieser Prozess sollte von
- preiswerten, gut verfügbaren Rohstoffen ausgehen,
- in einfachen Anlagen und Apparaten durchgeführt werden können,
- eine hohe Raum/Zeit-Ausbeute ermöglichen und
- direkt eine wasserfreie Lösung des gewünschten Seltenerdmetallhalogenid/Lithiumsalzgemisches
ergeben.

Die Aufgabe wird überraschenderweise dadurch gelöst, dass erfindungsgemäß Seltenerdmetalloxide mit Halogenierungsmitteln der allgemeinen Formel

MHalX¹X²X³

mit M = Si, Ge, Sn, Ti, Zr oder Hf;
Hal = Cl, Br oder I;
X¹, X², X³ = unabhängig voneinander Cl, Br, I, H, Alkoxid (-OR), wobei R einen Organorest mit 1 - 20 C-Atomen darstellt, Alkyl mit 1 - 20 C-Atomen oder Aryl mit 6 - 20 C-Atomen, wobei die Alkyl- oder Arylreste einen oder mehrere weitere Halogensubstituenten, ausgewählt aus der Gruppe Cl, Br oder I tragen können,

in einem aprotischen, polaren Lösungsmittel in Gegenwart eines Lithiumsalzes LiY umgesetzt werden. Y hat dabei die Bedeutung Hal, wobei Hal ausgewählt ist aus der Gruppe Cl, Br und I.

Bevorzugte erfindungsgemäße Halogenierungsmittel sind beispielsweise die Tetrahalogenmetallverbindungen MHal₄ (M und Hal = Bedeutungen s.o.); Arylmetallhalogenide wie C₆H₅MHal₃; Hydridometallhalogenide wie HMHal₃; halogenfunktionalisierte Arylmetallhalogenide wie C₆H₄HalMHal₃ mit C₆H₄Hal = z.B. 4-Chlor-, Brom- oder Iodphenyl; Alkylmetallhalogenide, besonders bevorzugt Methylmetallhalogenide wie (H₃C)MHal₃, (H₃C)₂MHal₂, (H₃C)₃MHal, (H₃C)₂MClCH₂Hal oder Mischungen daraus.

Besonders bevorzugte Halogenierungsmittel sind: SiCl₄, SiBr₄, GeCl₄, SnCl₄, TiCl₄, TiBr₄, C₆H₅SiCl₃, 4-ClC₆H₄SiCl₃, 4-BrC₆H₄SiCl₃, HSiCl₃, (H₃C)₂ClSiCH₂Cl, (H₃C)₂ClSiCH2Br, (H₃C)SiCl₃, (H₃C)₂SiCl₂, (H₃C)₃SiCl. Ganz besonders bevorzugt sind SiCl₄ und SiBr₄.

Viele dieser Halogenierungsmittel, z.B. SiCl₄, TiCl₄ und viele Alkylsiliciumchloride sind in technischen Mengen marktverfügbar und können ohne weitere Vorbehandlung für das erfindungsgemäße Verfahren eingesetzt werden.

Das Molverhältnis zwischen dem Seltenerdoxid SE₂O₃ und der Metallhalogenverbindung MHalX¹X²X³ ist dabei folgendermaßen beschaffen:
ca. 1 : 6 für X¹, X², X³ ‡ Hal
ca. 1 : 3 für X¹ = Hal, X², X³ ‡ Hal
ca. 1 : 2 für X¹, X² = Hal, X³ ‡ Hal
ca. 1 : 1,5 für X¹, X², X³ = Hal

Um eine möglichst vollständige Umsetzung zu erreichen, kann die Metallhalogenverbindung auch im Überschuss, bevorzugt mit 1 - 50 % Überschuß, eingesetzt werden.

Die Reaktionsstöchiometrie wird anhand des folgenden Beispiels erläutert. Wird als Halogenierungsmittel eine Tetrahalogenverbindung gewählt (sind also X¹, X² und X³ = Hal), so sieht die Reaktionsgleichung wie folgt aus:

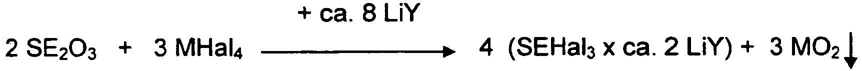

Als polare aprotische Lösemittel eignen sich etherische Verbindungen, entweder
■ offenkettig wie R¹-O-R² (mit R¹ und R² unabhängig voneinander Alkyl oder Aryl mit 1-8 C-Atomen); oder
■ cyclisch wie 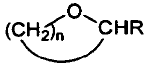 mit n = 3 oder 4 und R = H oder Alkyl mit 1-8 C-Atomen; oder
■ mehrfunktionelle wie R-O(-CH₂-CH₂)-OR' mit R und R' unabhängig voneinander Alkylreste mit 1-8 C-Atomen und n = 1-100
entweder in reiner Form oder in Mischung. Als etherisches Lösungsmittel kann besonders bevorzugt z.B. Tetrahydrofuran, Tetrahydropyran, 2-Methyltetrahydrofuran, Tetrahydropyran, Dimethylether, Diethylether, Methyl-tert-Butylether, 1,2-Dimethoxyethan oder eine Mischung aus einem oder mehreren der genannten Lösemitteln eingesetzt werden.

Weiterhin sind die folgenden aprotischen, polaren Lösemittel in bestimmten Fällen verwendbar:
■ Ester, z.B. Carbonsäureester wie Ethylacetat, γ-Butyrolacton, Methylbenzoat oder Kohlensäureester wie Dimethylcarbonat, Diethylcarbonat, Propylencarbonat, Ethylencarbonat oder Mischungen daraus
■ Ketone, z.B. Aceton, Propiophenon
■ Amide, z.B. N-Methylpyrrolidon, Dimethylacetamid, Dimethylpropylenharnstoff (DMPU);
■ Nitrile, z.B. Acetonitril, Butyronitril
■ Halogenfreie Schwefelverbindungen wie z.B. Dimethylsulfoxid, Tetrahydrothiophen
■ tertiäre Amine, z.B. Triethylamin, Tetramethylethylendiamin

Vorzugsweise wird die Umsetzung in einem Gemisch aus einer Flüssigkeit, ausgewählt aus den Stoffgruppen Ether, Ester, Ketone, Amide, Nitrile, halogenfreie Schwefelverbindungen und tertiäre Amine sowie einem Kohlenwasserstoff vorgenommen.

Die genannten Lösemittel sind nicht allgemein verwendbar, wenn die erfindungsgemäßen Verfahrensprodukte für organometallische Transformationen eingesetzt werden sollen, da sie beispielsweise von Magnesium- und Lithiumorganylen angegriffen werden.

Den polaren aprotischen Lösemitteln können gegebenenfalls ein oder mehrere Kohlenwasserstoffe wie z.B. Alkane oder Aromaten im Gewichtsverhältnis Lösemittel : Kohlenwasserstoff = 1 : maximal 5 hinzugefügt werden.

Als Seltenerdoxide werden die Verbindungen SE₂O₃ mit SE = Sc, Y, La, Ce, Pr, Nd, Pm, Sm, Eu, Gd, Tb, Dy, Ho, Er, Tm, Yb oder Lu, im Allgemeinen in handelsüblicher Form eingesetzt. Bevorzugt werden sie in pulverisierter Form und wasserfrei, d.h. mit H₂O-Gehalten < 0,5 % verwendet. Besonders bevorzugt werden eingesetzt Nd₂O₃, Sm₂O₃ oder La₂O₃.

Das Anion des Lithiumsalzes LiY wird bevorzugt aus Y = Hal gewählt. Hal hat die Beutung Halogen (Cl, Br, I). Ganz besonders bevorzugt sind LiCl, LiBr, LiI oder Mischungen daraus. Das molare Verhältnis zwischen Lithiumsalz LiY und Seltenerdmetall SE beträgt zwischen 0,1 und 5, bevorzugt 0,5 und 4, ganz besonders bevorzugt zwischen 1,0 und 3,0.

Das allgemeine Herstellverfahren läuft wie folgt ab: in einem inertisierten Reaktionsgefäß (inertisiert = wasserfrei und mit Inertgas gefüllt) werden das Seltenerdmetalloxid sowie das Lithiumsalz im aprotischen Lösungsmittel oder Lösungsmittelgemisch vorgelegt. Dann wird das Halogenierungsmittel in die gerührte Suspension eindosiert. Die bevorzugte Umsetzungstemperatur richtet sich nach der Reaktivität der jeweiligen Rohstoffkombination. Im Allgemeinen wird im Bereich zwischen -20 °C und ca. 100 °C gearbeitet, bevorzugt zwischen 0 und 80 °C. Die Dosierung des Halogenierungsmittels erfolgt über einen Zeitraum von ca. 10 Minuten bis 5 Stunden, bevorzugt 0,5 bis 3 Stunden. Nach Dosierende kann noch einige Zeit unter Rühren nachreagiert werden, besonders bevorzugt bei höheren Temperaturen, in THF beispielsweise unter Rückflußbedingungen (ca. 66 °C).

Unter den gewählten Bedingungen geht das Seltenerdmetallhalogenid in Form eines Komplexes mit dem Lithiumsalz gleich in Lösung. Beispielsweise bildet sich bei der Umsetzung von Neodymoxid mit Siliciumtetrachlorid in THF in Gegenwart von ca. 2 eq Lithiumchlorid gleich eine Lösung von NdCl₃ 2LiCl. Es wurde gefunden, dass das als Nebenprodukt entstehende chorhaltige Siliciumoxid mit der ungefähren Zusammensetzung Si_{3,5}O₆Cl₂ überraschenderweise in unlöslicher Form anfällt, so dass die Neodymchlorid-haltige Lösung in reiner Form, d.h. ohne Verunreinigungen durch Si-haltige Nebenprodukte, isoliert werden kann. Dies steht im Gegensatz zum Verhalten im Lithiumsalz-freien Reaktionsgemisch, bei dem das Si-Nebenprodukt in Lösung bleibt bzw sich nach Lagerung in Form eines nicht unmittelbar abtrennbaren Gels abscheidet (s. Beispiel 1 aus PCT/EP 2005/013285). Beim Einsatz von Siliciumtetrachlorid liegen die Gehalte an solchen störenden Verunreinigungen (löslichen SiO-haltigen Verbindungen) < 100 µmol/g Lösung, bevorzugt < 50 µmol/g Lösung, besonders bevorzugt < 25 µmol/g Lösung. Der Gehalt an löslichen SiO-haltigen Störstoffen lässt sich durch Titration mit n-Butyllithium-Lösung bestimmen.

Die erfindungsgemäß hergestellten Seltenerdmetall- und Lithium-haltigen Lösungen lassen sich bei Verwendung von Metalltetrahalogenverbindungen durch eine einfache fest/flüssig-Trennung, also beispielsweise Filtration, Zentrifugation oder Dekantation von den unlöslichen Si-haltigen Begleitprodukten vollständig abtrennen, da die Metalloxidnebenprodukte im allgemeinen in unlöslicher Form anfallen.

Die Konzentration des Seltenerdmetallhalogenids in den erfindungsgemäßen Produktlösungen richtet sich nach dem jeweils verwendeten Lösungsmittel, dem Molverhältnis Lithiumsalz : Seltenerdmetallhalogenid sowie dem Seltenerdmetallhalogenid selbst. In THF als Lösungsmittel liegen bevorzugte Seltenerdmetallkonzentrationen bei einem Molverhältnis LiY zu SEHal₃ = 1:1 bis 3:1 zwischen etwa 5 und 30 Gew.%, besonders bevorzugt zwischen 10 und 20 Gew.%.

Es wurde weiterhin gefunden, dass die Wassergehalte in den erfin dungsgemäß hergestellten Produktlösungen (gemessen mit Karl Fischer Titration) überraschenderweise extrem niedrig liegen. Im Allgemeinen liegen die Wassergehalte < 200 ppm und bevorzugt < 100 ppm. Deshalb entfällt eine aufwändige Nachtrocknung der erfindungsgemäß hergestellten Produkte. Es ist also keine aufwändige Nachbehandlung (z.B. Trocknung mit Molsieb) mehr notwendig, um die erfindungsgemäßen Produktösungen für Organometallreaktionen einsetzen zu können. Der Gehalt an löslichen SiO-haltigen Störstoffen, wird vorzugsweise durch Titration mit n-Butyllithiurn-Lösung bestimmt und liegt im Allgemeinen < 100 µmol/g Lösung, bevorzugt < 50 µmol/g Lösung, besonders bevorzugt < 25 µmol/g Lösung.

Die erfindungsgemäß hergestellten Produktlösungen können als solche für verschiedene organische Reaktionen verwendet werden. Vorzugsweise werden sie als Reagenzien für organische oder anorganische Reaktionen, als Rohstoffe zur Herstellung spezifischer Seltenerdverbindungen oder als Katalysator in Polymerisationsreaktionen verwendet. Ganz besonders eignen sie sich als selektivitätsverbessernde Additive bei 1,2-Additionen von Organometallverbindungen (z.B. Magnesium- und Lithiumorganylen) an Carbonyle oder Imine.

Die Erfindung wird anhand der nachstehenden Beispiele erläutert:

### Beispiel 1: Herstellung von 15%iger Lösung von LaCl₃ - 2 LiCl in THF durch Umsetzung von La₂O₃/4LiCl mit SiCl₄ in THF

479 g Lanthanoxid, 262 g LiCl-Pulver (Wassergehalt 800 ppm) und 3800 g Tetrahydrofuran (Wassergehalt 130 ppm) wurden in einem getrockneten und mit dem Schutzgas Argon gefüllten 6-I-Doppelmantelreaktor vorgelegt. Unter Rühren wurde eine Innentemperatur von ca. 60 °C eingestellt und dann 410 g SiCl₄ innerhalb von 2,5 Stunden gleichmäßig zudosiert. Während der gesamten Dosierphase lag die Innentemperatur zwischen 65 und 67 °C, d. h. das Reaktionsgemisch (eine weiße Suspension) refluxierte schwach.

Nach Zugabeende wurde die Manteltemperatur auf 80 °C angehoben und 2 h rückflussgekocht. Nach dieser Zeit wirkte der weiße suspendierte Feststoff kompakt und er sedimentierte gut. Es wurde auf RT abgekühlt und die Suspension auf eine Drucknutsche abgelassen.

Die Filtration dauerte etwa eine halbe Stunde und es wurden 3,7 kg eines fast farblosen, klaren Filtrates erhalten. Dann wurde der Filterkuchen mit insgesamt 1,99 kg THF, aufgeteilt auf 3 Portionen, gewaschen und dann bei Raumtemperatur 2,5 h unter gelegentlichem Umrühren vakuumgetrocknet. Der getrocknete Filterrückstand war schneeweiß und kaum staubig.

Die nachfolgende Tabelle fasst die Versuchsergebnisse und -analysen zusammen:

| | Menge | Analyse | | | | | |
|---|---|---|---|---|---|---|---|
| | | La | Li | Cl | H₂O | Fe | BuLi-Titration |
| | (g) | (mmol/g) | | | (ppm) | | (µmol/g) |
| Urfiltrat | 3740 | 0,60* | 1,27 | 3,06 | 41 | 14 | 15 |
| W-filtrat | 2133 | 0,235 | 0,49 | 1,20 | 20 | 9 | 4 |
| F.-Rückstand | 530 | 0,18 | 0,36 | 2,98 | n.b. | 45 | n.b. |

| | | | | | | | |
|---|---|---|---|---|---|---|---|
| *14,7 Gew% LaCl₃ n.b. = nicht bestimmt | | | | | | | |

Die knapp 15 Gew. % LaCl₃ enthaltende Produktlösung besitzt ein LiCl : LaCl₃ - Molverhältnis von 2,1 und weist einen sehr niedrigen Wassergehalt von 41 ppm und einen ebenfalls sehr niedrigen Gehalt an Störstoffen (15 µmol/g), ermittelt durch Titration mit n-Butyllithium, auf.
**Ausbeute:** 550 g LaCl₃-Inhalt
   76 % d. Th. im Urfiltrat; 93 % d.Th. in allen Filtraten

### Beispiel 2: Bestimmung der störenden Verunreinigungen mittels Titration mit n-Butyllithium

Etwa 10 g der der nach Beispiel 1 hergestellten Lanthanchloridlösung werden in ein ausgeheiztes, inertisiertes Septumgefäß mit einem Magnetrührkern eingespritzt. Nach Zugabe von wenigen Tropfen 1,10-Phenanthrolinlösung wird ca. 5 %ige n-Butyllithiumlösung unter Rühren tröpfchenweise so lange zugegeben, bis ein Farbumschlag von farblos nach violett erfolgt.

Auf diese Art und Weise wurde ein Störstoffgehalt von 15 µmol/g ermittelt.

## Patentansprüche

1. Verfahren zur Herstellung wasserfreier Seltenerdhalogenide (SEHal₃) mit SE = Sc, Y, La, Ce, Pr, Nd, Pm, Sm, Eu, Gd, Tb, Dy, Ho, Er, Tm, Yb oder Lu und Hal = Cl, Br oder I **dadurch gekennzeichnet, dass** Seltenerdoxide SE₂O₃ in einem polaren aprotischen Lösungsmittel mit Halogenierungsmitteln der allgemeinen Formel
MHalX¹X²X³
mit M = Si, Ge, Sn, Ti, Zr oder Hf;
Hal = Cl, Br oder I;
X¹, X², X³ = unabhängig voneinander Cl, Br, I, H, Alkoxid (-OR), wobei R einen Organorest mit 1 - 20 C-Atomen darstellt, Alkyl mit 1 - 20 C-Atomen oder Aryl mit 6 - 20 C-Atomen, wobei die Alkyl- oder Arylreste einen oder mehrere weitere Halogensubstituenten, ausgewählt aus der Gruppe Cl, Br oder I tragen können,
in einem aprotischen, polaren Lösungsmittel in Gegenwart eine Lithiumsalzes LiY mit Y = Hal, wobei Hal ausgewählt ist aus der Gruppe Cl, Br und I, umgesetzt werden.

2. Verfahren nach Anspruch 1, **dadurch gekennzeichnet, dass** das Molverhältnis zwischen dem Seltenerdoxid SE₂O₃ und der Metallhalogenverbindung MHalX¹X²X³ folgendermaßen beschaffen ist:
1 : 6 für X¹, X², X³ ‡ Hal
1 : 3 für X¹ = Hal, X², X³ ‡ Hal
1 : 2 für X¹, X² = Hal, X³ ‡ Hal
1 : 1,5 für X¹, X², X³ = Hal

3. Verfahren nach Anspruch 1 oder 2, **dadurch gekennzeichnet, dass** die Metallhalogenverbindung im Überschuss eingesetzt wird (1 - 50 %).

4. Verfahren nach einem oder mehreren der Ansprüche 1 bis 3, **dadurch gekennzeichnet, dass** das molare Verhältnis zwischen Lithiumsalz LiY und Seltenerdmetall SE zwischen 0,1 und 5, bevorzugt 0,5 und 4, ganz besonders bevorzugt zwischen 1,0 und 3,0 beträgt.

5. Verfahren nach einem oder mehreren der Ansprüche 1 bis 4, **dadurch gekennzeichnet, dass** als polares, aprotisches Lösemittel offenkettige oder cyclische mono- oder mehrfunktionelle Ether, entweder in reiner Form oder in Mischung eingesetzt werden.

6. Verfahren nach einem oder mehreren der Ansprüche 1 bis 5, **dadurch gekennzeichnet, dass** als polares, aprotisches Lösemittel eine oder mehrere Flüssigkeiten aus den Stoffgruppen Ether, Ester, Ketone, Amide, Nitrile, halogenfreie Schwefelverbindungen oder tertiäre Amine eingesetzt werden.

7. Verfahren nach einem oder mehreren der Ansprüche 1 bis 6, **dadurch gekennzeichnet, dass** die Umsetzung in einem Gemisch aus einem etherischen Lösemittel und einem Kohlenwasserstoff durchgeführt wird.

8. Verfahren nach einem oder mehreren der Ansprüche 1 bis 7, **dadurch gekennzeichnet, dass** als Kohlenwasserstoff bevorzugt ein aromatisches Lösemittel, ausgewählt aus der Gruppe Benzol, Toluol, Ethylbenzol, Cumol oder Xylol oder ein Alkan, ausgewählt aus der Gruppe Pentan, Hexan, Cyclohexan, Methylcyclohexan, Heptan oder Oktan verwendet wird.

9. Verfahren nach einem oder mehreren der Ansprüche 1 bis 8, **dadurch gekennzeichnet, dass** als etherisches Lösemittel bevorzugt Tetrahydrofuran, Tetrahydropyran, 2-Methyltetrahydrofuran, Dimethylether, Diethylether oder Methyl-tert-Butylether, 1,2-Dimethoxyethan oder eine Mischung daraus verwendet wird.

10. Verfahren nach einem oder mehreren der Ansprüche 1 bis 9, **dadurch gekennzeichnet, dass** die Umsetzung im Temperaturbereich zwischen -20 und +100 °C, bevorzugt im Temperaturbereich 0 bis 80 °C, durchgeführt wird.

11. Verfahren nach einem oder mehreren der Ansprüche 1 bis 10, **dadurch gekennzeichnet, dass** als Halogenierungsmittel bevorzugt Tetrahalogenmetallverbindungen MHal₄ (M und Hal = Bedeutungen s.o.); Arylmetallhalogenide wie C₆H₅MHal₃; Hydridometallhalogenide wie HMHal₃; halogenfunktionalisierte Arylmetallhalogenide wie C₆H₄HalMHal₃ mit C₆H₄Hal = z.B. 4-Chlor-, Brom- oder lodphenyl; Alkylmetallhalogenide, besonders bevorzugt Methylmetallhalogenide wie (H₃C)MHal₃, (H₃C)₂MHal₂, (H₃C)₃MHal, (H₃C)₂MClCH₂Hal oder Mischungen daraus eingesetzt werden.

12. Verfahren nach einem oder mehreren der Ansprüche 1 bis 11, **dadurch gekennzeichnet, dass** als Halogenierungsmittel bevorzugt die Verbindungen SiCl₄, SiBr₄, GeCl₄, SnCl₄, TiCl₄, TiBr₄, C₆H₅SiCl₃, 4-ClC₆H₄SiCl₃, 4-BrC₆H₄SiCl₃, HSiCl₃, (H₃C)₂ClSiCH₂Cl, (H₃C)₂ClSiCH₂Br, (H₃C)SiCl₃, (H₃C)₂SiCl₂ oder (H₃C)₃SiCl, besonders bevorzugt SiCl₄ oder SiBr₄ eingesetzt werden.

13. Verfahren nach einem oder mehreren der Ansprüche 1 bis 12, **dadurch gekennzeichnet, dass** als Seltenerdoxid besonders bevorzugt Nd₂O₃, Sm₂O₃ oder La₂O₃ eingesetzt werden.

14. Verfahren nach einem oder mehreren der Ansprüche 1 bis 13, **dadurch gekennzeichnet, dass** beim Einsatz von THF als Lösungsmittel die Seltenerdmetallkonzentrationen bei einem Molverhältnis LiY zu SEHal₃ = 1:1 bis 3:1 zwischen etwa 5 und 30 Gew.-%, besonders bevorzugt zwischen 10 und 20 Gew.-% liegt.

15. Verfahren nach einem oder mehreren der Ansprüche 1 bis 14, **dadurch gekennzeichnet, dass** der Wassergehalt < 200 ppm und bevorzugt < 100 ppm liegt.

## Claims

1. A process for the preparation of anhydrous rare-earth halides (SEHal₃), where SE = Sc, Y, La, Ce, Pr, Nd, Pm, Sm, Eu, Gd, Tb, Dy, Ho, Er, Tm, Yb or Lu and Hal = Cl, Br or I, **characterized in that** rare-earth oxides SE₂O₃ in a polar aprotic solvent are reacted with halogenating agents of the general formula
MHalX¹X²X³
where M = Si, Ge, Sn, Ti, Zr or Hf;
Hal = Cl, Br or I;
X¹, X², X³ independently of one another = Cl, Br, I, H, alkoxide (-OR), R being an organic radical having 1 - 20 C atoms, alkyl having 1 - 20 C atoms or aryl having 6 - 20 C atoms, it being possible for the alkyl or aryl radicals to carry one or more other halogen substituents selected from the group comprising Cl, Br or I,
in an aprotic polar solvent in the presence of a lithium salt LiY, where Y = Hal, Hal being selected from the group comprising Cl, Br and I.

2. A process according to claim 1, **characterized in that** the molar ratio of the rare-earth oxide SE₂O₃ to the metal halogen compound MHalX¹X²X³ is as follows:
1 :6 for X¹, X², X³ ≠ Hal
1:3 for X¹ = Hal, X², X³ ≠ Hal
1:2 for X¹, X² = Hal, X³ ≠ Hal
1:1.5 for X¹, X², X³ = Hal

3. A process according to claim 1 or 2, **characterized in that** the metal-halogen compound is used in excess (1 - 50%).

4. A process according to one or more of claims 1 to 3, **characterized in that** the molar ratio of lithium salt LiY to rare-earth metal SE is between 0.1 and 5, preferably between 0.5 and 4 and very particularly preferably between 1.0 and 3.0.

5. A process according to one or more of claims 1 to 4, **characterized in that** open-chain or cyclic mono- or polyfunctional ethers, either pure or in a mixture, are used as the polar aprotic solvent.

6. A process according to one or more of claims 1 to 5, **characterized in that** one or more liquids from the groups of substances comprising ethers, esters, ketones, amides, nitriles, halogen-free sulphur compounds or tertiary amines are used as the polar aprotic solvent.

7. A process according to one or more of claims 1 to 6, **characterized in that** the reaction is carried out in a mixture of an ether solvent and a hydrocarbon.

8. A process according to one or more of claims 1 to 7, **characterized in that** an aromatic solvent selected from the group comprising benzene, toluene, ethylbenzene, cumene or xylene, or an alkane selected from the group comprising pentane, hexane, cyclohexane, methylcyclohexane, heptane or octane, is preferably used as the hydrocarbon.

9. A process according to one or more of claims 1 to 8, **characterized in that** tetrahydrofuran, tetrahydropyran, 2-methyltetrahydrofuran, dimethyl ether, diethyl ether or methyl tert-butyl ether, 1,2-dimethoxyethane or a mixture thereof is preferably used as the ether solvent.

10. A process according to one or more of claims 1 to 9, **characterized in that** the reaction is carried out in the temperature range between -20 and +100°C, preferably in the temperature range 0 to 80°C.

11. A process according to one or more of claims 1 to 10, **characterized in that** metal tetrahalogen compounds MHal₄ (M and Hal as defined above); arylmetal halides such as C₆H₅MHal₃; hydridometal halides such as HMHal₃; halogen-functionalized arylmetal halides such as C₆H₄HalMHal₃, where C₆H₄Hal = e.g. 4-chloro-, bromo- or iodophenyl; alkylmetal halides, particularly preferably methylmetal halides such as (H₃C)MHal₃, (H₃C)₂MHal₂, (H₃C)₃MHal, (H₃C)₂MClCH₂Hal or mixtures thereof, are preferably used as the halogenating agent.

12. A process according to one or more of claims 1 to 11, **characterized in that** the compounds SiCl₄, SiBr₄, GeCl₄, SnCl₄, TiCl₄, TiBr₄, C₆H₅SiCl₃, 4-ClC₆H₄SiCl₃, 4-BrC₆H₄SiCl₃, HSiCl₃, (H₃C)₂ClSiCH₂Cl, (H₃C)₂ClSiCH₂Br, (H₃C)SiCl₃, (H₃C)₂SiCl₂ or (H₃C)₃SiCl, particularly preferably SiCl₄ or SiBr₄, are preferably used as the halogenating agent.

13. A process according to one or more of claims 1 to 12, **characterized in that** Nd₂O₃, Sm₂O₃ or La₂O₃ are particularly preferably used as the rare-earth oxide.

14. A process according to one or more of claims 1 to 13, **characterized in that**, when using THF as solvent, the rare-earth metal concentrations for a molar ratio LiY:SEHal₃ of 1:1 to 3:1 are between about 5 and 30 wt.%, particularly preferably between 10 and 20 wt.%.

15. A process according to one or more of claims 1 to 14, **characterized in that** the water content is < 200 ppm, preferably < 100 ppm.

## Revendications

1. Procédé de préparation d'halogénures de terre rare TrHal₃ anhydres, où Tr représente Sc, Y, La, Ce, Pr, Nd, Pm, Sm, Eu, Gd, Tb, Dy, Ho, Er, Tm, Yb ou Lu et Hal représente Cl, Br ou I, **caractérisé en ce que** l'on fait réagir un oxyde de terre rare Tr₂O₃, dans un solvant polaire aprotique, avec un agent d'halogénation de formule générale
MHalX¹X²X³
dans laquelle
- M représente Si, Ge, Sn, Ti, Zr ou Hf,
- Hal représente Cl, Br ou I,
- et X¹, X² et X³ représentent chacun, indépendamment l'un de l'autre, un atome de chlore, de brome, d'iode ou d'hydrogène, un groupe alcoxy -OR où R représente un reste organique comportant de 1 à 20 atomes de carbone, ou un groupe alkyle comportant de 1 à 20 atomes de carbone ou aryle comportant de 6 à 20 atomes de carbone, lesquels groupes alkyle et aryle peuvent porter un ou plusieurs autres substituant(s) halogéno choisi(s) dans l'ensemble formé par les atomes de chlore, de brome et d'iode,
dans un solvant polaire aprotique, en présence d'un sel de lithium de formule LiY où Y représente Hal, soit un atome d'un halogène choisi parmi le chlore, le brome et l'iode.

2. Procédé conforme à la revendication 1, **caractérisé en ce que** le rapport molaire entre l'oxyde de terre rare Tr₂O₃ et le composé halogéné de métal MHalX¹X²X³ prend l'une des valeurs suivantes :
1/6 si X¹, X² et X³ ≠ Hal
1/3 si X¹ = Hal et X² et X³ Hal
1/2 si X¹ et X² = Hal et X³ ≠ Hal
1/1,5 si X¹, X² et X³ = Hal

3. Procédé conforme à la revendication 1 ou 2, **caractérisé en ce que** le composé halogéné de métal est utilisé en excès (1 - 50 %).

4. Procédé conforme à l'une ou plusieurs des revendications 1 à 3, **caractérisé en ce que** le rapport molaire entre le sel de lithium LiY et le métal terre rare Tr vaut de 0,1 à 5, de préférence de 0,5 à 4 et surtout de 1,0 à 3,0.

5. Procédé conforme à l'une ou plusieurs des revendications 1 à 4, **caractérisé en ce que** l'on utilise, en tant que solvant polaire aprotique, des monoéthers ou des polyéthers à chaîne ouverte ou cyclique, purs ou mélangés.

6. Procédé conforme à l'une ou plusieurs des revendications 1 à 5, **caractérisé en ce que** l'on utilise, en tant que solvant polaire aprotique, un ou plusieurs liquide(s) choisi(s) parmi les classes suivantes :
éthers, esters, cétones, amides, nitriles, composés soufrés non halogénés, et amines tertiaires.

7. Procédé conforme à l'une ou plusieurs des revendications 1 à 6, **caractérisé en ce que** l'on effectue la réaction dans un mélange formé d'un solvant de type éther et d'un hydrocarbure.

8. Procédé conforme à l'une ou plusieurs des revendications 1 à 7, **caractérisé en ce que** l'on utilise de préférence, en tant qu'hydrocarbure, un solvant aromatique choisi dans l'ensemble formé par les benzène, toluène, éthyl-benzène, cumène et xylène, ou un alcane choisi dans l'ensemble formé par les pentane, hexane, cyclohexane, méthyl-cyclohexane, heptane et octane.

9. Procédé conforme à l'une ou plusieurs des revendications 1 à 8, **caractérisé en ce que** l'on utilise de préférence, en tant que solvant de type éther, du tétrahydrofurane, du tétrahydropyrane, du 2-méthyl-tétrahydrofurane, de l'éther diméthylique, de l'éther diéthylique, du méthyl-tertiobutyl-éther ou du 1,2-diméthoxy-éthane, ou un mélange de ces composés.

10. Procédé conforme à l'une ou plusieurs des revendications 1 à 9, **caractérisé en ce que** l'on effectue la réaction dans l'intervalle de température allant de -20 à +100 °C, et de préférence dans celui allant de 0 à 80 °C.

11. Procédé conforme à l'une ou plusieurs des revendications 1 à 10, **caractérisé en ce que** l'on utilise de préférence, en tant qu'agent d'halogénation, des tétrahalogénures de métal de formule MHal₄ (M et Hal ayant les significations indiquées plus haut), des halogénures d'aryl-métal, tels ceux de formule C₆H₅MHal₃, des hydruro-halogénures de métal, tels ceux de formule HMHal₃, des halogénures d'halogéno-aryl-métal, tels ceux de formule C₆H₄HalMHal₃, où C₆H₄Hal représente par exemple un groupe 4-chloro-phényle, bromo-phényle ou iodo-phényle, des halogénures d'alkyl-métal, en particulier des halogénures de méthyl-métal, tels ceux de formule (H₃C)MHal₃, (H₃C)₂MHal₂, (H₃C)₃MHal ou (H₃C)₂MClCH₂Hal, ou des mélanges de tels composés.

12. Procédé conforme à l'une ou plusieurs des revendications 1 à 11, **caractérisé en ce que** l'on utilise de préférence, en tant qu'agent d'halogénation, l'un des composés suivants : SiCl₄, SiBr₄, GeCl₄, SnCl₄, TiCl₄, TiBr₄, C₆H₅SiCl₃, 4-ClC₆H₄SiCl₃, 4-BrC₆H₄SiCl₃, HSiCl₃, (H₃C)₂ClSiCH₂Cl, (H₃C)₂ClSiCH₂Br, (H₃C)SiCl₃, (H₃C)₂SiCl₂ et (H₃C)₃SiCl, mais surtout SiCl₄ ou SiBr₄.

13. Procédé conforme à l'une ou plusieurs des revendications 1 à 12, **caractérisé en ce que** l'on utilise de préférence, en tant qu'oxyde de terre rare, Nd₂O₃, Sm₂O₃ ou La₂O₃.

14. Procédé conforme à l'une ou plusieurs des revendications 1 à 13, **caractérisé en ce que**, quand on utilise du tétrahydrofurane en tant que solvant, la concentration du métal terre rare, pour un rapport molaire du sel LiY à l'halogénure TrHal₃ de 1/1 à 3/1, vaut à peu près de 5 à 30 % en poids, et en particulier de 10 à 20 % en poids.

15. Procédé conforme à l'une ou plusieurs des revendications 1 à 14, **caractérisé en ce que** la teneur en eau vaut moins de 200 ppm, et en particulier, moins de 100 ppm.
